# EUROPÄISCHE PATENTSCHRIFT

(11) **EP 3 256 666 B1**
(45) Veröffentlichungstag und Bekanntmachung des Hinweises auf die Patenterteilung: **17.07.2024**
(21) Anmeldenummer: 16704214.2
(22) Anmeldetag: 12.02.2016
(51) Int. Cl.: E04B 2/74, E04B 2/82

(54) **UNIVERSELLES FUGENDICHTBAND FÜR UNTERSCHIEDLICHE PROFILDIMENSIONEN UND DICHTANORDNUNG MIT DERARTIGEM FUGENDICHTBAND**
UNIVERSAL JOINT SEALING STRIP FOR DIFFERENT PROFILE DIMENSIONS, AND SEALING ARRANGEMENT HAVING A JOINT SEALING STRIP OF THIS TYPE
BANDE D'ÉTANCHÉITÉ DE JOINTURE UNIVERSELLE POUR DIFFÉRENTES DIMENSIONS DE PROFILÉ ET DISPOSITIF D'ÉTANCHÉITÉ POURVU D'UNE TELLE BANDE D'ÉTANCHÉITÉ DE JOINTURE

(30) Priorität: 13.02.2015 EP 15155101; 13.02.2015 EP 15155100; 13.02.2015 EP 15155102; 13.02.2015 EP 15155103; 11.05.2015 EP 15167086
(43) Veröffentlichungstag der Anmeldung: 20.12.2017
(73) Patentinhaber: Hilti Aktiengesellschaft, 9494 Schaan (LI)
(72) Erfinder: KLEINHANS, Gottfried, 86875 Waal (DE); KLEIN, Manfred, 86916 Kaufering (DE)
(74) Vertreter: Hilti Aktiengesellschaft Corporate Intellectual Property
(86) Internationale Anmeldenummer: PCT/EP2016/053013
(87) Internationale Veröffentlichungsnummer: WO 2016/128552

(56) Entgegenhaltungen:
- EP-A1- 0 102 103
- DE-U1- 29 503 352
- GB-A- 1 494 854
- US-A1- 2004 109 984
- US-B1- 6 418 688

## Beschreibung

### GEBIET DER ERFINDUNG

Die vorliegende Erfindung betrifft ein universelles Fugendichtband für unterschiedliche Profildimensionen eines Trockenbauständerwerks zum Abdichten von Bauwerksfugen, insbesondere zur Abdichtung gegen Schall und Rauch und gegebenenfalls gegen Feuer. Insbesondere betrifft die Erfindung die akustische, rauchsichere und/oder brandsichere Abdichtung von Anschlussfugen bei Trockenbauwänden vor allem von Bewegungsfugen.

### HINTERGRUND DER ERFINDUNG

Anschlussfugen entstehen in der Regel, wenn unterschiedliche Bauteile aufeinander treffen. Anschlussfugen befinden sich im Anschlussbereich zur Geschossdecke, zum Fußboden und zu Massivwänden. Durch Gewichtsbelastung oder thermische Einflüsse kann es bei Gebäuden zu einem Senken oder Heben der Decke kommen. Um Beschädigungen der Trockenbauwand zu vermeiden, wird in diesem Fall die obere Anschlussfuge als Bewegungsfuge ausgeführt. Als Bewegungsfugen werden daher Fugen zur Unterbrechung von Bauteilen bezeichnet, die Spannungsrissen vorbeugen. Das Deckenprofil wird derart ausgeführt, dass eine Relativbewegung zwischen Deckenprofil und den senkrechten Wandkomponenten möglich ist.

Im Allgemeinen wird auf die Anschlussbauteile ein U-Profil befestigt, welches Teil des Ständerwerkes ist. Gewöhnliche U-Profile mit denen gearbeitet wird, sind insbesondere U-Profile mit Profilbreiten von 2-1/2 Inch (64 mm), 3-5/8 Inch (92 mm), 4 Inch (102 mm), 6 Inch (152 mm), 8 Inch (203 mm) und 10 Inch (254 mm). Die Gipskartonplatten selber werden mit einem definierten Abstand zum Anschlussbauteil angebracht. Üblicherweise erfolgt die Abdichtung des Systems im Spalt zwischen Gipskartonplatte und Decke. Hierzu wird entweder eine geeignete Dichtmasse eingebracht oder aber der Spalt mit Mineralwolle gefüllt und an der Oberfläche mit einer abdichtenden Schicht versehen. In beiden Fällen behindert das in der Fuge befindliche Material die Bewegung relativ stark, mit der Konsequenz, dass zur Erzielung einer ausreichenden Bewegungsaufnahme mit verhältnismäßig großen Fugenbreiten gearbeitet werden muss.

Insbesondere die Abdichtung des Spaltes mit Dichtmasse hat einige Nachteile. Sie ist insbesondere arbeitsintensiv und die Abdichtung neigt im Laufe der Zeit zu Rissbildung bei Überbeanspruchung. Ferner kann die Abdichtung erst nach Montage der Gipskartonplatten erfolgen und erfordert beidseitigen Zugang zu der fertig gestellten Trockenbauwand. Darüber hinaus ist diese Vorgehensweise fehleranfällig, da der Anwender selber die richtige Menge an Material dosieren muss, um den Spalt ausreichend abzudichten. Darüber hinaus muss der Trockenbauer die Fuge, entsprechend den Material- und Dehneigenschaften der Dichtmasse, in der Breite dimensionieren. Bei der Installation der Dichtmasse kann dann nur noch die Fuge gefüllt werden. Bei einer Ausdehnung des Spaltes muss gewährleistet sein, dass die Dichtmasse ausreichend stark am Untergrund haftet und die entstehenden Zugkräfte aufnehmen kann. Häufig ist das nicht der Fall und es besteht die Gefahr des Ablösens der Dichtmasse vom Untergrund oder aber die Dichtmasse selber wird überbeansprucht und reißt. Im Falle einer Verringerung des Spaltes kann die Dichtmasse aufgrund ihrer Materialeigenschaften nur begrenzt komprimiert werden und es besteht die Gefahr, dass sie bei falsch dimensionierter Fuge aus dem Spalt gedrückt wird. Aufgrund des begrenzten Dehn- und Komprimiervermögens der Dichtmasse (max. +/- 25%) kommt der ausreichend großen Dimensionierung des Abstandes zwischen Gipskartonplatte und Decke eine große Bedeutung zu. Dies wird häufig unterschätzt, bei der Verwendung von gewöhnlichen Dichtmassen kann daher eine ausreichende Dichtigkeit oft nicht gewährleistet werden.

Zum Abdichten von Fugen existieren einige weitere Lösungen, insbesondere Fugenschnüre oder Fugensprays, die zum Teil dieselben Nachteile haben, wie sie für die Dichtmassen beschrieben wurden.

Darüber hinaus muss für jede Profilbreite des U-Profils eines Trockenbauständerwerks ein eigenes dimensioniertes Dichtband hergestellt werden, da auf einer Baustelle mit unterschiedlichen Profilbreiten der U-Profile gearbeitet wird, insbesondere für die 2-1/2 Inch- (64 mm), 3-5/8 Inch- (92 mm), 4 Inch- (102 mm), 6 Inch- (102 mm), 8 Inch- (203 mm) und 10 Inch- (254 mm) Schiene. Dem Trockenbauer bzw. dem Anwender müssen daher unterschiedlich breite Dichtbänder zur Verfügung stehen oder er muss sich diese selber aus einem gewöhnlichen Dichtband zurechtschneiden, was sehr arbeitsintensiv und unökonomisch ist.

Bekannte Fugendichtbänder sind beispielsweise aus der DE 295 03 352 U1 und der GB 1494854 A bekannt.

Die US 2004/109984 A1 offenbart ein Fugendichtband gemäß dem Oberbegriff des Anspruchs 1. Aufgabe der Erfindung ist es daher, ein Fugendichtband bereitzustellen, das die Nachteile der bekannten Materialien vermeidet, das insbesondere einfacher und sicherer anzuwenden ist, die Montage weiterer Bauteile vereinfacht, eine gute Abdichtung bereits bei seiner Anwendung gewährleistet, eine hervorragende Dichtigkeit bei maximaler Bewegungsaufnahme gewährleistet und gleichzeitig für unterschiedliche Profilbreiten des U-Profils eines Trockenbauständerwerks universell einsetzbar ist, insbesondere für die gewöhnlichen Profilbreiten von 2-1/2 Inch (64 mm), 3-5/8 Inch (92 mm), 4 Inch (102 mm), 6 Inch (152 mm), 8 Inch (203 mm) und 10 Inch (254 mm).

Eine weitere Aufgabe der vorliegenden Erfindung ist es, eine Anordnung bereitzustellen, die im Brandfall eine bessere Abdichtung der Fuge zwischen zwei Bauteilen, insbesondere zwischen einer Trockenbauwand und einem Anschlussbauteil, wie eine Wand, eine Decke oder ein Boden, ermöglicht und so eine bessere und dauerhafte Abdichtung gegenüber Schall und/oder Rauch und gegebenenfalls einen besseren und dauerhaften Brandschutz bereitstellt und mit geringerem Arbeitsaufwand zuverlässig und fehlerfrei montiert werden kann, auch für unterschiedliche Profildimensionen eines Trockenbauständerwerks.

Diese und weitere Aufgaben, die aus der folgenden Beschreibung der Erfindung ersichtlich sind, werden durch die vorliegende Erfindung, wie sie in dem unabhängigen Anspruch beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein Fugendichtband gemäß dem unabhängigen Anspruch 1 zur Abdichtung einer Fuge zwischen einem ersten Bauteil und einem zweiten Bauteil, mit einem langgestreckten Verbindungselement und mindestens zwei Dichtelementen, die beabstandet nebeneinander in Verbindungselementlängsrichtung verlaufend an dem Verbindungselement positioniert sind, das dadurch gekennzeichnet ist, dass das Verbindungselement eine Perforierung aufweist, die ein leichtes Trennen oder Auseinanderziehen ermöglicht, und dass die Dichtelemente ein Rundprofil, Ovalprofil oder ein Rechteckprofil mit abgerundeten Ecken aufweisen und aus einem langsam abbrennbaren Schaumstoff bestehen, wobei der langsam abbrennbare Schaumstoff keine Möglichkeit der Brandausbreitung durch den Schaumstoff bietet, nicht eigenentflammbar ist und auch nicht abtropft. Bevorzugt sind die Dichtelemente am äußeren Rand des Verbindungselements positioniert.

Die vorliegende Erfindung betrifft weiter eine Dichtanordnung zur Abdichtung einer Fuge zwischen zwei aneinander anliegenden Bauteilen mit wenigstens einem ersten Bauteil, einem zweiten Bauteil und dem erfindungsgemäßen Fugendichtband.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch Bezugnahme auf die folgenden Figuren beschrieben:

### KURZE BESCHREIBUNG DER FIGUREN

Figur 1a zeigt eine skizzierte Vorderansicht eines Fugendichtbandes gemäß einer nicht erfindungsgemäßen Ausführungsform, wobei die Dichtelemente ein Vollprofil und Rechteckprofil mit abgerundeten Ecken aufweisen und das Verbindungselement eine Perforierung aufweist.
Figur 1b zeigt eine skizzierte Vorderansicht eines getrennten Fugendichtbandes (zwei Fugendichtbandhälften) gemäß einer nicht erfindungsgemäßen Ausführungsform, wobei das Dichtelement jeweils ein Vollprofil und Rechteckprofil mit abgerundeten Ecken aufweist.
Figur 1c zeigt eine skizzierte Unteransicht eines Fugendichtband gemäß einer nicht erfindungsgemäßen Ausführungsform, wobei das Verbindungselement eine Perforierung aufweist.
Figur 2a zeigt eine skizzierte Vorderansicht eines Fugendichtbandes gemäß einer nicht erfindungsgemäßen Ausführungsform, wobei die Dichtelemente ein Vollprofil und Rechteckprofil mit abgerundeten Ecken aufweisen, das Verbindungselement eine Perforierung und zwei selbstklebende Vorrichtungen aufweist.
Figur 2b zeigt eine skizzierte Vorderansicht eines getrennten Fugendichtbandes (zwei Fugendichtbandhälften) gemäß einer nicht erfindungsgemäßen Ausführungsform, wobei das Dichtelement jeweils ein Vollprofil und Rechteckprofil mit abgerundeten Ecken aufweist und das Verbindungselement jeweils eine selbstklebende Vorrichtung.
Figur 2c zeigt eine skizzierte Unteransicht eines Fugendichtband gemäß einer nicht erfindungsgemäßen Ausführungsform, wobei das Verbindungselement eine Perforierung und zwei selbstklebende Vorrichtungen aufweist.
Figur 3a zeigt eine skizzierte Vorderansicht eines Fugendichtbandes gemäß einer Ausführungsform der vorliegenden Erfindung, wobei die Dichtelemente ein Vollprofil und Rechteckprofil mit abgerundeten Ecken aufweisen, das Verbindungselement eine Perforierung und ein Verbreiterungselement aufweist.
Figur 3b zeigt eine skizzierte Vorderansicht eines auseinandergezogenen Fugendichtband gemäß einer Ausführungsform der vorliegenden Erfindung, wobei die Dichtelemente ein Vollprofil und Rechteckprofil mit abgerundeten Ecken aufweisen und wobei das Verbreiterungselement die beiden auseinandergetrennten Fugendichtbandhälften verbindet.
Figur 4a zeigt eine skizzierte Vorderansicht eines Fugendichtbandes gemäß einer Ausführungsform der vorliegenden Erfindung, wobei die Dichtelemente ein Vollprofil und Rechteckprofil mit abgerundeten Ecken aufweisen, das Verbindungselement eine Perforierung und ein Verbreiterungselement aufweist und wobei das Verbreiterungselement eine weitere Verbreiterungsschlaufe aufweist.
Figur 4b zeigt eine skizzierte Vorderansicht eines auseinandergezogenen Fugendichtband gemäß einer Ausführungsform der vorliegenden Erfindung, wobei die Dichtelemente ein Vollprofil und Rechteckprofil mit abgerundeten Ecken aufweisen und wobei das Verbreiterungselement die beiden auseinandergetrennten Fugendichtbandhälften verbindet und eine weitere Verbreiterungsschlaufe aufweist.
Figur 4c zeigt eine skizzierte Vorderansicht eines zweimal auseinandergezogenen Fugendichtband gemäß einer Ausführungsform der vorliegenden Erfindung, wobei die Dichtelemente ein Vollprofil und Rechteckprofil mit abgerundeten Ecken aufweisen und wobei das Verbreiterungselement die beiden auseinandergetrennten Fugendichtbandhälften verbindet.
Figur 5a zeigt eine skizzierte Vorderansicht eines Fugendichtbandes gemäß einer Ausführungsform der vorliegenden Erfindung, wobei die Dichtelemente ein Vollprofil und Rundprofil aufweisen, das Verbindungselement eine Perforierung und ein Verbreiterungselement aufweist.
Figur 5b zeigt eine skizzierte Vorderansicht eines auseinandergezogenen Fugendichtband gemäß einer Ausführungsform der vorliegenden Erfindung, wobei die Dichtelemente ein Vollprofil und Rundprofil aufweisen und wobei das Verbreiterungselement die beiden auseinandergetrennten Fugendichtbandhälften verbindet.
Figur 6 skizziert eine Schnittansicht durch ein fertiges Bauelement mit der in Figuren 5a oder 5b gezeigten Ausführungsform eines erfindungsgemäßen Fugendichtbandes.

### AUSFÜHRLICHE BESCHREIBUNG DER ERFINDUNG

Die folgenden Begriffe werden im Rahmen der vorliegenden Erfindung verwendet:
Der Begriff "Geometrien" im Rahmen der vorliegenden Erfindung umfasst verschiedene Querschnittsarten und Querschnittsformen. Dies bedeutet, dass insbesondere die Dichtelemente unterschiedliche Querschnittsarten und Querschnittsformen aufweisen können. Unter Querschnittsarten werden u.a. Rundprofil (runder Querschnitt), Ovalprofil (ovaler Querschnitt), Mehreckprofil (mehreckiger Querschnitt), insbesondere Quadratprofil (quadratischer Querschnitt), Rechteckprofil (rechteckiger Querschnitt), Parallelogrammprofil (Querschnitt in Form eines Parallelogramms), Dreieckprofil (dreieckiger Querschnitt), etc., verstanden. Es sind jedoch auch andere oder gemischte Querschnittsformen denkbar und möglich, wie zum Beispiel ein Rechteckprofil mit abgerundeten Ecken. Unter Querschnittsformen werden u.a. Vollprofil und Hohlprofil verstanden, wobei beim Vollprofil die Dichtelemente vollständig aus Dichtmaterial bestehen, wohingegen beim Hohlprofil die Dichtelemente nur teilweise aus Dichtmaterial bestehen.

Der Begriff "verformbar" im Rahmen der vorliegenden Erfindung bedeutet, dass Unebenheiten im Bauteil ausgeglichen werden können, gegen das die Dichtelemente gepresst werden. "Plastisch verformbar" bedeutet dabei, dass die Dichtelemente verformbar sind und nach der Verformung nicht wieder in ihre ursprüngliche Form zurückkehren. "Elastisch verformbar" bedeutet dabei, dass die Dichtelemente verformbar sind und nach der Verformung wieder in ihre ursprüngliche Form zurückkehren, d.h. dass das Material sich zu einem gewissen Grad reversibel verformen lässt.

Die Begriffe "aufweisen", "mit" und "haben" sollen einschließend sein und bedeuten, dass auch andere als die genannten Elemente gemeint sein können.

Der Begriff "Intumeszenz" im Rahmen der vorliegenden Erfindung bedeutet dabei, dass unter Einwirkung von Hitze, beispielsweise im Brandfall, sich das Material aufbläht und eine isolierende Schicht aus schwerentflammbarem Material bildet, also intumesziert.

Unter "langsam abbrennenden Schaumstoff" wird im Rahmen der vorliegenden Erfindung ein Schaumstoff verstanden, der keine Möglichkeit der Brandausbreitung durch den Schaumstoff bietet, nicht eigenentflammbar ist und auch nicht abtropft.

Im "oberen Bereich der Fuge positioniert" bedeutet, dass die Dichtelemente dabei insbesondere seitlich an dem ersten Bauteil angeordnet sind.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

In einem Aspekt betrifft die vorliegende Erfindung ein Fugendichtband gemäß dem unabhängigen Anspruch 1 zur Abdichtung einer Fuge zwischen einem ersten Bauteil und einem zweiten Bauteil, mit einem langgestreckten Verbindungselement und mindestens zwei Dichtelementen, die beabstandet nebeneinander in Verbindungselementlängsrichtung verlaufend an dem Verbindungselement positioniert sind, wobei das Verbindungselement eine Perforierung aufweist.

In einem weiteren Aspekt betrifft die vorliegende Erfindung eine Dichtanordnung zur Abdichtung einer Fuge zwischen zwei aneinander anliegenden Bauteilen, mit wenigstens einem ersten Bauteil, einem zweiten Bauteil und dem erfindungsgemäßen Fugendichtband, wobei das Fugendichtband im oberen Bereich der Fuge positioniert und dazu konfiguriert ist, die Fuge von außen abzudichten.

Es wurde herausgefunden, dass das erfindungsgemäße Fugendichtband sich besonders dazu eignet, in einfacher Weise eine Bauwerksfuge zwischen zwei aneinandergrenzenden Bauteilen sicher abzudichten, insbesondere gegen Schall und/oder Rauch und gegebenenfalls auch gegen Feuer sowie dass das Fugendichtband gleichzeitig für unterschiedliche Profilbreiten, insbesondere eines U-Profils eines Trockenbauständerwerks, universell einsetzbar ist. Damit das Fugendichtband seine Funktion erfüllen kann, muss das Verbindungselement des Fugendichtbandes eine Perforierung aufweisen. Darüber hinaus ist es von Vorteil, dass die Dichtelemente des Fugendichtbandes eine vorbestimmte Geometrie aufweisen.

Daher ist es ein Ziel der vorliegenden Erfindung, das Fugendichtband zu beschreiben. Insbesondere ist es Ziel der vorliegenden Erfindung, die Geometrie der Dichtelemente und das Verbindungselement des Fugendichtbandes, das eine Perforierung aufweist, detailliert zu beschreiben. Ferner ist es Ziel der vorliegenden Erfindung, die Positionierung des Fugendichtbandes, insbesondere eine Dichtanordnung, zu beschreiben.

Das erfindungsgemäße Fugendichtband zur Abdichtung einer Fuge zwischen einem ersten Bauteil und einem zweiten Bauteil, mit einem langgestreckten Verbindungselement und mindestens zwei Dichtelementen, die beabstandet nebeneinander in Verbindungselementlängsrichtung verlaufend an dem Verbindungselement positioniert sind, ist dadurch gekennzeichnet, dass das Verbindungselement eine Perforierung aufweist.

Die Perforierung des Verbindungselements verläuft vorzugsweise in der Mitte des Verbindungselements, d.h. in Längsrichtung des Fugendichtbandes. Diese Perforierung ermöglich ein leichtes Trennen (Auseinanderreißen) oder alternativ ein Auseinanderziehen der beiden Fugendichtbandhälften. Durch Auseinanderreißen, ohne Einsatz von Werkzeug, lassen sich einfach zwei getrennte Fugendichtbandhälften herstellen, die jeweils ein Dichtelement besitzen, und die unter Zuhilfenahme einer Klebevorrichtung, wie beispielweise ein separates Klebeband oder Klebespray, und entweder für eine einseitige Abdichtung oder für breitere U-Profile, insbesondere U-Profile mit Profilbreiten von mehr als 10 Inch (254 mm), genutzt werden können. Es ist auch möglich, dass das Fugendichtband vor dem Trennen mit selbstklebenden Vorrichtungen versehen ist, so dass nach dem Auseinanderreißen zwei halbe Bänder entstehen, die sofort ohne weitere Hilfsmittel montiert werden können. Die Fugendichtbandhälften sind somit universell für unterschiedliche Profildimensionen einsetzbar.

Die Dichtelemente des erfindungsgemäßen Fugendichtbandes zur Abdichtung einer Fuge zwischen einem ersten Bauteil und einem zweiten Bauteil, weisen eine vorbestimmte Geometrie auf. Geometrien im Rahmen der vorliegenden Erfindung umfassen, wie oben schon erwähnt, verschiedene Querschnittsarten und Querschnittsformen.

Bevorzugte Querschnittsarten der Dichtelemente gemäß der vorliegenden Erfindung sind Vollprofil und Hohlprofil, wobei das Hohlprofil ein geschlossenes oder offenes Hohlprofil sein kann. Vollprofil und Hohlprofil mit großer Profilwandstärke haben den Vorteil, dass am Stoß zweier sich berührender Dichtelemente automatisch keine Lücke entsteht. Hohlprofile können stärker komprimiert werden, und somit mehr Bewegung aufnehmen. Besonders bevorzugt ist, dass die Dichtelemente ein Vollprofil aufweisen.

Bevorzugte Querschnittsformen der Dichtelemente gemäß der vorliegenden Erfindung sind ein Rundprofil, ein Ovalprofil oder ein Rechteckprofil mit abgerundeten Ecken, solange die Dichtelemente nach der Installation des Fugendichtbandes an die beiden Bauteile angrenzen und die zwischen den Bauteilen bestehende Fuge verschließen können. Bevorzugt sind die Dichtelemente am äußeren Rand des Verbindungselements positioniert.

In einer bevorzugten Ausführungsform des erfindungsgemäßen Fugendichtbandes weisen die Dichtelemente ein Rundprofil auf.

In einer weiteren, bevorzugten Ausführungsform des erfindungsgemäßen Fugendichtbandes weisen die Dichtelemente ein Ovalprofil auf.

In einer noch weiteren, bevorzugten Ausführungsform des erfindungsgemäßen Fugendichtbandes weisen die Dichtelemente ein Rechteckprofil mit abgerundeten Ecken auf.

In einer besonders bevorzugten Ausführungsform des erfindungsgemäßen Fugendichtbandes weisen die Dichtelemente ein Vollprofil und ein Rundprofil auf.

In einer weiteren, besonders bevorzugten Ausführungsform des erfindungsgemäßen Fugendichtbandes weisen die Dichtelemente ein Vollprofil und ein Ovalprofil auf.

In einer noch weiteren, besonders bevorzugten Ausführungsform des erfindungsgemäßen Fugendichtbandes weisen die Dichtelemente ein Vollprofil und ein Rechteckprofil mit abgerundeten Ecken auf.

Die Geometrie der Dichtelemente kann vorgefertigt werden, zum Beispiel durch definiertes Zuschneiden, Extrudieren oder Pressen von geeignetem Dichtmaterial, oder direkt aus Flachmaterial, beispielsweise mittels Falten oder Rollen aus einem flachen Ausgangsmaterial, wie zum Beispiel Gewebe, insbesondere aus einem nicht-brennbaren Material, wie anorganische Fasern, beispielsweise Glasfasern, einem Vlies oder dergleichen hergestellt werden. Die Herstellung solcher Querschnittsarten und Querschnittsformen ist dem Fachmann bekannt. Bevorzugt ist, dass die Geometrie der Dichtelemente durch definiertes Zuschneiden oder Extrudieren vorgefertigt wird.. Besonders bevorzugt ist, dass die Geometrie der Dichtelemente durch Extrudieren vorgefertigt wird.

Die erfindungsgemäßen Dichtelemente können einstückig aus einem Material hergestellt werden bzw. bestehen, oder mehrteilig aus mehreren Materialien hergestellt werden bzw. bestehen und beispielsweise als Schichtkörper vorliegen. In alternativen Ausführungsformen können der Außenbereich und der Innenbereich eines Dichtelements separate Bereiche des Dichtelements definieren, die unterschiedliche Querschnittsformen und/oder Querschnittsarten aufweisen und/oder aus unterschiedlichen Materialien bestehen können.

Erfindungsgemäß bestehen die Dichtelemente aus einem verformbaren Material. Das Material kann dabei entweder plastisch oder elastisch verformbar sein. Insbesondere bestehen die Dichtelemente zumindest teilweise, bevorzugt vollständig aus einem nach Kompression rückstellfähigen Material, nämlich Schaumstoff.

Erfindungsgemäß bestehen die Dichtelemente aus einem langsam abbrennenden Schaumstoff, wie beispielsweise Zellkautschuk oder Polyurethanschaum. Bei einem langsam abbrennenden Schaumstoff besteht keine Möglichkeit der Brandausbreitung durch den Schaumstoff. Eine Eigenentflammung ist bei den oben genannten Schaumstoffausgangsmaterialien ausgeschlossen. Vorteilhaft ist, dass im Brandfall auch kein Abtropfen erfolgt. Ein langsam abbrennender Schaumstoff sollte in einem Temperaturbereich zwischen 500°C bis 800°C noch mindestens 20%, noch mindestens 25%, vorzugsweise noch mindestens 30%, zwischen 20% bis 60%, zwischen 20% bis 40%, vorzugsweise zwischen 25% bis 30%, seines Ausgangsvolumens besitzen. Ferner sollte ein langsam abbrennender Schaumstoff in einem Temperaturbereich zwischen 500°C bis 800°C noch mindestens 10%, mindestens 20%, vorzugsweise noch mindestens 30%, zwischen 10% bis 40%, zwischen 10% bis 30%, vorzugsweise zwischen 15% bis 20%, seiner Ausgangsmasse besitzen.

Ferner kann das Material, sofern Brandschutzeigenschaften, wie beispielsweise Intumeszenz, gewünscht sind, entsprechende Additive enthalten. Unter Einwirkung von Hitze, wie im Brandfall, bläht sich das Material auf und bildet eine isolierende Schicht aus schwerentflammbarem Material. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen, gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

In einigen Ausführungsformen ist es auch ausreichend, wenn alleine das Verbindungselement dicht gegenüber Rauch und/oder Gasen ist.

In einer bevorzugten Ausführungsform des erfindungsgemäßen Fugendichtbandes bestehen die Dichtelemente aus einem offenzelligen Schaum.

In einer weiteren, bevorzugten Ausführungsform des erfindungsgemäßen Fugendichtbandes bestehen die Dichtelemente aus einem geschlossenzelligen Schaum.

In einer besonderen bevorzugten Ausführungsform des erfindungsgemäßen Fugendichtbandes bestehen die Dichtelemente aus einem offenzelligen Polyurethanschaum.

In einer weiteren, besonderen bevorzugten Ausführungsform des erfindungsgemäßen Fugendichtbandes bestehen die Dichtelemente aus einem Zellkautschuk.

Das Verbindungselement kann aus einem verformbaren Material, das gleich dem der Dichtelemente sein kann, aus einer Folie, beispielsweise einer Kunststofffolie, aus einem Gewebe, insbesondere aus einem nicht-brennbaren Material, wie anorganische Fasern, beispielsweise Glasfasern, einem Vlies oder dergleichen bestehen. Bevorzugt ist, dass das Verbindungselement aus einem verformbaren Material gleich dem der Dichtelemente oder einer Folie besteht.

Das Verbindungselement kann einstückig aus einem Material oder mehrteilig, auch aus verschiedenen Materialien hergestellt werden. Bevorzugt ist, dass das Verbindungselement aus einem verformbaren Material ist und zumindest teilweise von einer Folie umhüllt ist. Das Verbindungselement kann herstellungsbedingt unterschiedliche Dicken aufweisen.

Das erfindungsgemäße Fugendichtband kann einstückig aus einem Material oder mehrteilig, auch aus verschiedenen Materialien hergestellt werden. Bevorzugt ist, dass das Fugendichtband aus mehreren Einheiten/Materialien besteht. Besonders bevorzugt ist, dass die Dichtelemente aus verformbarem Material bestehen und das Verbindungselement zumindest teilweise aus verformbarem Material besteht. Am bevorzugtesten ist, dass die Dichtelemente aus verformbarem Material und das Verbindungselement zumindest teilweise aus verformbarem Material besteht und dass das Fugendichtband von einer Folie umhüllt ist, vorzugsweise einer Kunststofffolie.

In einer Ausführungsform des erfindungsgemäßen Fugendichtbandes sind die Dichtelemente zumindest über einen Teil ihres Umfangs fest mit dem Verbindungselement verbunden. Hierdurch wird eine feste Verbindung zwischen dem Verbindungselement und den Dichtelementen geschaffen, so dass auch bei starker Beanspruchung des Befestigungsbereichs und bei einem teilweisen Lösen der Dichtelemente von dem Verbindungselement verhindert wird, dass sich die Dichtelemente vollständig von dem Verbindungselement lösen.

In einer weiteren Ausführungsform des erfindungsgemäßen Fugendichtbandes sind die Dichtelemente über ihren gesamten Umfang fest mit dem Verbindungselement verbunden. Hierdurch wird zum einen eine optimale und dauerhafte Befestigung der Dichtelemente an dem Verbindungselement erreicht, die ein Ablösen der Dichtelemente von dem Verbindungselement nahezu unmöglich machen. Zum anderen kann, wenn das Verbindungsmaterial rauchgasdicht ist, ein offenzelliges Schaummaterial für die Dichtelemente verwendet werden.

In einer bevorzugten Ausführungsform des erfindungsgemäßen Fugendichtbandes sind die Dichtelemente und das Verbindungselement aus einem Material gefertigt und dementsprechend fest miteinander verbunden und von einer Folie umhüllt, vorzugsweise einer Kunststofffolie.

Der Bereich des Verbindungselements, der zwischen den beiden Dichtelementen, genauer zwischen den beiden Angriffspunkten des Verbindungselements an den Dichtelement liegt, definiert einen Auflagebereich, der nur aus dem Verbindungselement besteht. Der Auflagebereich wird dabei so dimensioniert, dass dieser etwa der Breite des Steges des U-Profils entspricht. Hierdurch werden die Installation und insbesondere die Positionierung des Fugendichtbandes auf dem Steg des U-Profils erleichtert. Bevorzugt ist, dass der Auflagebereich des erfindungsgemäßen Fugendichtbandes eine Breite im Bereich von etwa 30 mm bis etwa 300 mm hat, vorzugsweise im Bereich von etwa 50 bis 250 mm, und bevorzugter im Bereich von etwa 90 bis 155 mm. Besonders bevorzugt ist, dass der Auflagebereich des erfindungsgemäßen Fugendichtbandes eine Breite von 67 mm für eine 2-1/2 Inch- (64 mm) Schiene, von 95 mm für eine 3-5/8 Inch-(92 mm) Schiene, von 105 mm für eine 4 Inch- (102 mm) Schiene, von 155 mm für eine 6 Inch- (152 mm) Schiene, von 206 mm für eine 8 Inch- (203 mm) Schiene bzw. von 257 mm für eine 10 Inch- (254 mm) Schiene hat. Am meisten bevorzugt ist, dass der Auflagebereich des erfindungsgemäßen Fugendichtbandes eine Breite von 95 mm für eine 3-5/8 Inch- (92 mm) Schiene bzw. von 155 mm für eine 6 Inch- (152 mm) Schiene hat.

Um verschiedene Profildimensionen, insbesondere verschiedene Breiten des Auflagebereiches zu erhalten, weist das Verbindungselement des erfindungsgemäßen Fugendichtbandes ferner zumindest ein Verbreiterungselement auf, welches in Form einer Schlaufe vorliegt. Das Verbreiterungselement besteht aus einem verformbaren Material, einer Kunststofffolie, einem Gewebe, einem Vlies oder dergleichen, bevorzugt aus einer Kunststofffolie.

Dieses Verbreiterungselement wird auf der Ober- oder Unterseite des Verbindungselements so befestigt, dass eine Schlaufe entsteht. Befestigung erfolgt durch Aufnähen, Aufkleben oder Aufschweißen, vorzugsweise durch Aufschweißen. Die Dimension der Schlaufe ist so bemessen, dass nach dem Auseinanderziehen der beiden Fugendichtbandhälften mittels Durchtrennen der Perforierung des Verbindungselements die gewünschte Breite für ein alternatives Profil entsteht. So kann durch einen Trennungsschritt eine zweite Profildimension erhalten werden, d.h. das Fugendichtband ist beispielsweise gleichzeitig für eine 3-5/8 Inch- (92 mm) bzw. 6 Inch- (152 mm) Schiene einsetzbar.

Ferner kann das erfindungsgemäße Fugendichtband ein oder mehrere zusätzliche Verbreiterungselemente in Form von Schlaufen aufweisen. Diese zusätzlichen Verbreiterungselemente können dadurch erhalten werden, dass die Schlaufe des zumindest einen Verbreiterungselements noch ein oder mehrere Male mit einer Schweißnaht unterteilt werden, so dass mit einem Produkt durch entsprechendes Auseinandertrennen der Naht oder Nähte mehrere Profilbreiten abgedeckt werden können. Insbesondere, können durch das eine oder durch die mehreren Verbreiterungselemente die gängigen U-Profile mit Profilbreiten von 2-1/2 Inch (64 mm), 3-5/8 Inch (92 mm), 4 Inch (102 mm), 6 Inch (152 mm), 8 Inch (203 mm) und 10 Inch (254 mm) abgedeckt werden. Hierdurch werden die Installation und insbesondere die Positionierung des Fugendichtbandes auf dem Steg des U-Profils erleichtert. Zur Erleichterung der Auswahl der gewünschten Breite des Fugendichtbandes für ein bestimmtes Profil, können die Verbreiterungselemente mit Markierungen für die bestimmten Profilgrößen versehen werden. Durch die Flexibilität des Verbreiterungselements ist es jedoch möglich, auch andere Profilbreiten von U-Profilen eines Trockenständerbauwerkes mit dem erfindungsgemäßen Fugendichtband abzudecken und die Fuge abzudichten.

Durch das erfindungsgemäße Fugendichtband wird ein universelles Produkt für verschiedene Profilgrößen und Anwendungen bereitgestellt, das sich darüber hinaus in einer Fertigungslinie kostengünstig herstellen lässt.

Wird das Fugendichtband mehrteilig hergestellt, erfolgt die Positionierung der Dichtelemente an das Verbindungselement durch Mittel zur Befestigung, beispielsweise in Form einer Klebeschicht, insbesondere eine Selbstklebeschicht, in Form von form- oder kraftschlüssig wirkenden Mitteln, wie geeignete Profilierungen, oder mittels Schweißen, wie z. B. thermisches Schweißen oder Ultraschallschweißen, oder dergleichen. Bevorzugt ist eine Positionierung der Dichtelemente an das Verbindungselement mittels einer Klebeschicht oder Schweißen. Bei einstückigen Fugendichtbändern ist die Positionierung herstellungsbedingt vorbestimmt.

Die Dimension und das Material des Fugendichtbandes, insbesondere sowohl der Dichtelemente als auch des Verbindungselements werden entsprechend der geplanten Verwendung des Fugendichtbandes gewählt.

Im Allgemeinen wird die Dimension der Dichtelemente in Abhängigkeit der verwendeten Profilarten und des verwendeten Materials gewählt. Die Dimension muss so gewählt werden, dass das Dichtelement den Spalt zwischen der Gipskartonplatte und der Decke ausfüllt und abdichtend sowohl an der Decke als auch an der Gipskartonplatte anliegt. Soll eine vertikale Bewegung der Gipskartonplatten zugelassen werden, muss das Dichtelement der Bewegung der Gipskartonplatte folgen, damit der Kontakt mit der Gipskartonplatte nicht abreißt und keine Lücke zwischen Dichtelement und Gipskartonplatte entstehen kann. Hierzu besteht das Dichtelement bevorzugt aus rückstellfähigem und komprimierbarem Material und wird bei der Montage der Gipskartonplatten entsprechend vorkomprimiert, damit einer Abwärtsbewegung der Gipskartonplatte, wodurch der Spalt zwischen dieser und der Decke vergrößert wird, gefolgt werden kann. Die voreingestellte Bewegungsfreiheit der Gipskartonplatte bestimmt somit die Dimension des Dichtelements.

Beispielhaft soll erwähnt sein, dass die Höhe der Schmalseite von zum Beispiel rechteckigen Dichtelementen in Abhängigkeit der gewünschten Anwendung des Dichtelementes gewählt wird, wobei bei einfacher Beplankung die Höhe etwa in der Dicke einer Gipskartonplatte und bei doppelter Beplankung die Höhe etwa in der doppelten Dicke einer Gipskartonplatte gewählt wird. Es ist aber auch möglich, bei einfacher Beplankung das für die doppelte Beplankung ausgelegte Fugendichtband zu verwenden.

Beispielhaft soll auch erwähnt werden, dass Material und Geometrie des Dichtelements derart gewählt werden können, dass dessen Härte bzw. Komprimierbarkeit so eingestellt ist, dass allein durch das Eigengewicht der Gipskartonplatte im Bodenbereich der Dichtelemente auf eine definierte Höhe zusammengedrückt wird, beispielsweise durch einen zweilagigen Aufbau des Dichtelements aus Schaumstoffen mit unterschiedlicher Stauchdichte. Damit kann ohne weiteres Messen ein korrekter Abstand zwischen Boden und Gipskarton eingestellt werden. Dies ist insbesondere dann erforderlich, wenn eine Beschädigung der Gipskartonplatte durch aufsteigende Nässe verhindert werden soll.

Die Positionierung der Dichtelemente an einem Bauteil kann mittels eines Verbindungselements in einem Schritt erfolgen. Es ist auch möglich, dass das Verbindungselement und/oder die Dichtelemente ihrerseits Mittel zur Befestigung an einem Bauteil, wie einem Trockenbauprofil, aufweisen, beispielsweise in Form einer Selbstklebeschicht, in Form von form- oder kraftschlüssig wirkenden Mitteln, wie geeignete Profilierungen, oder dergleichen, wahlweise ist auch eine einzelne Positionierung der Dichtelemente möglich, beispielweise wenn das Fugendichtband an der Perforierung getrennt wird und zwei Fugendichtbandhälften erhalten werden. Das erfindungsgemäße Fugendichtband wird jedoch vorzugsweise in einem Schritt an ein Bauteil positioniert.

Zum Erstellen einer erfindungsgemäßen Dichtanordnung wird das erfindungsgemäße Fugendichtband vor der Anbringung eines ersten Bauteils auf dem ersten Bauteil positioniert und dann gemeinsam mit diesem an einem zweiten Bauteil in üblicher Weise, z.B. durch Schrauben oder Nageln, befestigt. Vorzugsweise ist das erste Bauteil ein Rahmenprofil eines Trockenbauständerwerks, etwa ein U-Profil, und das zweite Bauteil eine Wand, eine Decke oder ein Boden eines Bauwerks. Besonders bevorzugt ist das erste Bauteil ein U-Profil, und das zweite Bauteil eine Decke. Mit dieser Anordnung ist das Fugendichtband im oberen Bereich der Fuge positioniert und dazu konfiguriert, die Fuge von außen abzudichten.

In einer Möglichkeit zum Abdichten einer Anschlussfuge im Trockenbau wird das Fugendichtband vor der Anbringung des Profils an den Anschlussbauteilen, wie etwa eine Decke, auf einem U-Profil positioniert und dann gemeinsam mit diesem an der Decke befestigt. In einem weiteren Arbeitsgang werden die Gipskartonplatten, ein- oder zweilagig, stirnseitig an das Dichtelement gedrückt, so dass bei doppelter Beplankung die beiden Gipskartonplatten mit jeweils ihrer Oberkante in Kontakt mit dem Dichtelement kommen, und dadurch eine Abdichtung der Fuge erreicht wird. Um die Bewegung der Gipskartonplatte(n) zuzulassen, ohne dass bei maximaler Bewegung ein Spalt zwischen dem Dichtelement und der Gipskartonplatte bzw. den Gipskartonplatten entsteht, muss bei der Montage der Gipskartonplatte(n) das Dichtelement komprimiert werden.

Hierbei wird das Material und die Dicke des Dichtelements jeweils so gewählt, dass das Dichtelement die Bewegung der Gipskartonplatte(n) nicht behindert und bei maximaler Fugenbreite weiterhin die Oberkante der Gipskartonplatte(n) das Dichtelement berührt, um eine hinreichende Abdichtung gegen Gase sicherzustellen. Die Breite des Dichtelements wird bevorzugt so gewählt, dass diese etwa der doppelten Breite einer Gipskartonplatte entspricht. Es hat sich herausgestellt, dass eine hinreichende Abdichtung auch dann erreicht werden kann, wenn die Breite des Dichtelements der Breite nur einer Gipskartonplatte entspricht.

Bei der Anordnung des Fugendichtbandes auf dem U-Profil und auf Stoß mit der Decke können Unebenheiten in beiden Bauteilen ausgeglichen werden und eine einfache Positionierung ohne Verklebung ist möglich. Ferner kann durch die anschließende Positionierung der Gipskartonplatte sowie durch die Auswahl der Dichtmaterialien und/oder Geometriegestaltung des Fugendichtbandes der Fugenabstand kontrolliert werden.

Alternativ kann bei Verwendung nur einer Gipskartonplatte diese nicht von unten auf Stoß mit dem Dichtelement montiert werden, sondern so, dass die Gipskartonplatte mit dem Dichtelement teilweise überlappt. Dadurch überragt die Gipskartonplatte das Dichtelement teilweise und der überlappende Teil des Dichtelements wird zwischen das U-Profil und die Gipskartonplatte gepresst. Es hat sich herausgestellt, dass auch hierdurch eine ausreichende Abdichtung, insbesondere gegen Gase, erreicht werden kann. Zur Verbesserung der Dichtigkeit und/oder der Gleiteigenschaften kann das Dichtband einseitig mit einer Schicht aus einem Material, welche die Bewegung der Gipskartonplatte weder behindert noch durch diese zerstört wird, wie etwa eine Kunststofffolie, kaschiert werden. Auf beispielsweise eine Folie lässt sich einfach die Positionierungsmarkierung für die Gipskartonplatte aufbringen.

Bei dieser Montageart wird eine große Bewegungsaufnahme, im Verhältnis zur Fugenbreite, möglich. Ferner ist diese Art montagefreundlicher als die zuvor erwähnte einfache oder doppelte Beplankung, da die Gipskartonplatte ohne Abstandmessung einfach auf dem Dichtelement montiert werden kann. Bei Verwendung einer Positionierungsmarkierung kann die Gipskartonplatte ohne Abstandmessung montiert werden. Darüber hinaus ist man bei dieser Montageart nicht auf gut komprimierbare Materialien für die Dichtelemente angewiesen und hat daher eine relativ große Freiheit bei der Wahl des Materials.

In einer weiteren, besonders bevorzugten Alternative kann eine Abdichtung der Fuge erreicht werden, wenn bei doppelter Beplankung die beiden Gipskartonplatten derart horizontal versetzt montiert werden, dass die äußere der beiden Gipskartonplatten (auch als äußere, zweite Gipskartonplatte bezeichnet) höher (d.h. näher an die Decke) als die innere Gipskartonplatte (auch als innere, erste Gipskartonplatte bezeichnet) montiert wird. In dieser Ausführungsform wird die Dicke des Dichtelements entsprechend der Dicke einer Gipskartonplatte gewählt. Die erste, innere Gipskartonplatte wird derart montiert, dass deren Oberkante die Stirnflächen des Dichtelements berührt, wobei keine oder wenig Vorkomprimierung des Dichtelements erforderlich ist. Die zweite, äußere Gipskartonplatte wird horizontal versetzt angebracht, d.h. sie wird höher montiert als die erste, innere Gipskartonplatte, so dass sie das Dichtelement teilweise überdeckt. Dabei sollten sich das Dichtelement und die Gipskartonplatte dichtend aneinanderlegen, um den Spalt zwischen der äußeren, zweiten Gipskartonplatte und dem Dichtelement, insbesondere gegen Gase, abzudichten. Damit findet eine Abdichtung zwischen Dichtelement und dem zweiten Bauteil, etwa eine Decke, eine Wand oder ein Boden, sowie zwischen Dichtelement und äußerer, zweiter Gipskartonplatte statt.

Zwischen dem zweiten Bauteil, etwa eine Decke, eine Wand oder ein Boden, und der äußeren, zweiten Gipskartonplatte verbleibt ein leerer Spalt. Dieser Spalt steht im Falle einer vertikalen Bewegung des zweiten Bauteils oder der Gipskartonplatten vollständig einer Bewegungsaufnahme zur Verfügung.

Abhängig davon wie weit die äußere, zweite Gipskartonplatte das Dichtelement überdeckt (Größe des Versatzes) kann auch eine Bewegung in die andere Richtung aufgenommen werden. Wichtig ist, dass in diesem Falle eine Überdeckung zwischen der zweiten Gipskartonplatte und dem Fugendichtband gewährleistet bleibt. Bevorzugt wird daher die Dimension des Dichtelements so gewählt, dass dessen Dicke etwas größer ist als die Dicke einer Gipskartonplatte und dessen Höhe etwas mehr als die maximal zulässige Bewegung der Bauteile (maximale Fugenbreite) umfasst.

Dadurch dass die Dicke des Dichtelements größer ist als die Dicke der Gipskartonplatte wird die Gipskartonplatte bei deren Montage gegen das Dichtelement gepresst und etwas komprimiert, wodurch der Spalt zwischen Dichtelement und Gipskartonplatte zuverlässig, insbesondere gegen Gase, abgedichtet wird.

Für eine leichtere Einstellung des richtigen Fugenmaßes bei der äußeren, zweiten Gipskartonplatte können Markierungen seitlich auf dem Fugendichtband angebracht werden, eine sogenannte Positionierungsmarkierung. Zur Verbesserung der Dichtigkeit und/oder der Gleiteigenschaften kann das Dichtband einseitig mit einer Schicht aus einem Material, welche die Bewegung der Gipskartonplatte weder behindert noch durch diese zerstört wird, wie etwa eine Kunststofffolie, kaschiert werden. Auf beispielsweise eine Folie lässt sich einfach die Positionierungsmarkierung für die äußere, zweite Gipskartonplatte aufbringen.

Bei dieser Montageart wird eine maximale Bewegungsaufnahme, im Verhältnis zur Fugenbreite, möglich. Ferner ist diese Art sehr montagefreundlich, da zum einen die erste Gipskartonplatte ohne Abstandmessung einfach auf Kontakt zu dem Dichtelement montiert werden kann. Zum zweiten kann insbesondere bei Verwendung einer Positionierungsmarkierung die zweite Gipskartonplatte ebenfalls ohne Abstandmessung montiert werden. Darüber hinaus ergibt sich durch diese Montageart eine größtmögliche Freiheit bei der Wahl des Materials für die Dichtelemente, da diese nur wenig komprimiert werden und somit nur geringe Anforderung an die Komprimierbarkeit des Dichtelements gestellt werden.

Erfindungsgemäß lässt sich das Fugendichtband auf alle Arten von Anschlussfugen anwenden, bei denen ein Bauteil auf ein anderes Bauteil trifft. Dementsprechend lässt sich das Fugendichtband auf alle Profile, auch geschlossene Profile oder Holzbalken, anwenden, die zu einer Anschlussfläche abgedichtet werden müssen.

Eine besonders bevorzugte Anwendung des Fugendichtbandes betrifft somit die Abdichtung der Profile im Trockenbau, wobei das erste Bauteil ein Decken-, Boden- oder Wandprofil oder ein Metall- oder Holzständerwerk eines Trockenbauelements, ist und das zweite Bauteil ein Boden, eine Decke oder eine Wand eines Bauelements, beispielsweise ein Mauerwerk oder Betonbauelement. Bei dem Profil kann es sich um irgendeines der üblicherweise verwendeten Profile für den Trockenbau handeln, unabhängig davon, ob es einen geschlitzten oder ungeschlitzten Steg bzw. geschlitzte oder ungeschlitzte Flansche aufweist. Die weiteren Bauteile sind Gipskartonplatten, die eng an die Profile anliegen und am Ständerwerk befestigt werden. Um eine vertikale Bewegung der Gipskartonplatten, etwa im Falle eines Erdbebens, zuzulassen, werden die Gipskartonplatten auf Abstand zu einer Wand, einem Boden oder einer Decke, vertikal beweglich montiert. Dadurch entsteht eine Lücke (hierin auch Fuge genannt) zwischen der Gipskartonplatte und der Wand, dem Boden oder der Decke. Diese Fuge wird durch das Dichtelement des Fugendichtbandes ausgefüllt, so dass das Dichtelement die Fuge gegen Schall und/oder Rauch und je nach Material des Fugendichtbandes gegebenenfalls auch gegen Feuer abdichtet.

Ohne den Schutzumfang der Erfindung einzuschränken, wird die Erfindung anhand spezieller Ausführungsformen des Fugendichtbandes näher beschrieben. In diesen Ausführungsformen wird das Fugendichtband auf die Anschlussfugen bei Trockenbauwänden angewendet. Dem Fachmann ist klar, dass das Dichtband auch auf andere geartete Bauwerksfugen angewendet werden kann.

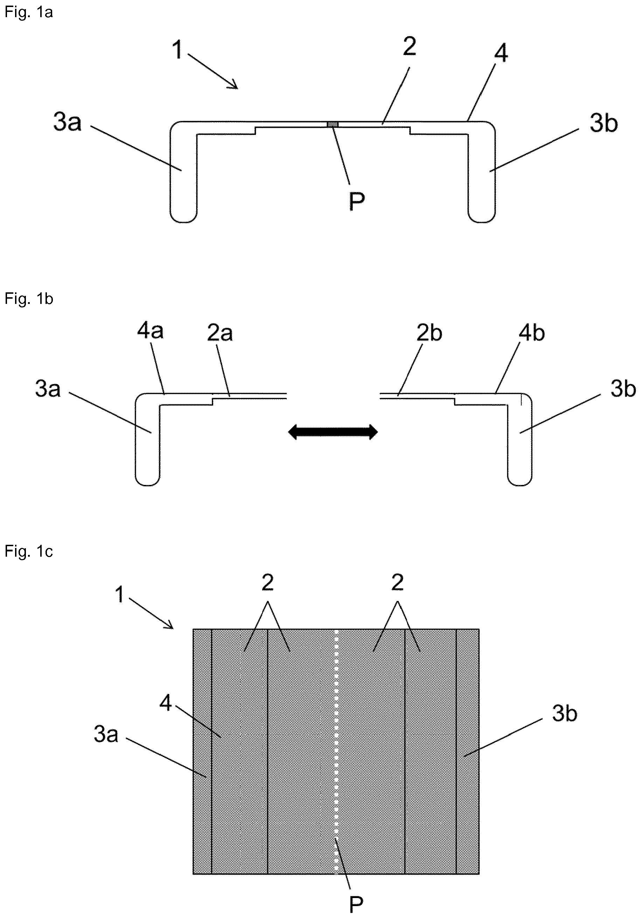

In Figuren 1a bis 1c ist eine nicht erfindungsgemäße Ausführungsform eines Fugendichtbandes 1 gezeigt. Das Fugendichtband 1 in Figur 1a weist zwei Dichtelemente 3a und 3b auf, die an den äußeren Rändern des Verbindungselements 2 positioniert sind. Die Dichtelemente 3a und 3b weisen ein Rechteckprofil mit abgerundeten Ecken und ein Vollprofil auf, wobei das Verbindungselement 2 seitlich an den Dichtungselementen 3a und 3b positioniert ist. Weiter sind die Dichtelemente 3a und 3b und Verbindungselement 2 einstückig hergestellt und bestehen aus einem komprimierbaren Schaumstoff, der gegebenenfalls Brandschutzadditive enthält. Das Fugendichtband 1 ist vollständig von einer Kunststofffolie 4 umhüllt und weist eine Perforierung (P) in Längsrichtung des Fugendichtbandes 1 auf. Figur 1b zeigt das an der Perforierung getrennte Fugendichtband 1 aus Figur 1a (zwei Fugendichtbandhälften), wobei die zwei Fugendichtbandhälften jeweils ein Dichtelement 3a, 3b, jeweils einen Teil 2a, 2b des Verbindungselements 2 und jeweils teilweise mit Kunststofffolie 4a, 4b umhüllt sind. Figur 1c zeigt eine skizzierte Unteransicht des Fugendichtbands 1 gemäß der Ausführungsform von Figur 1a.

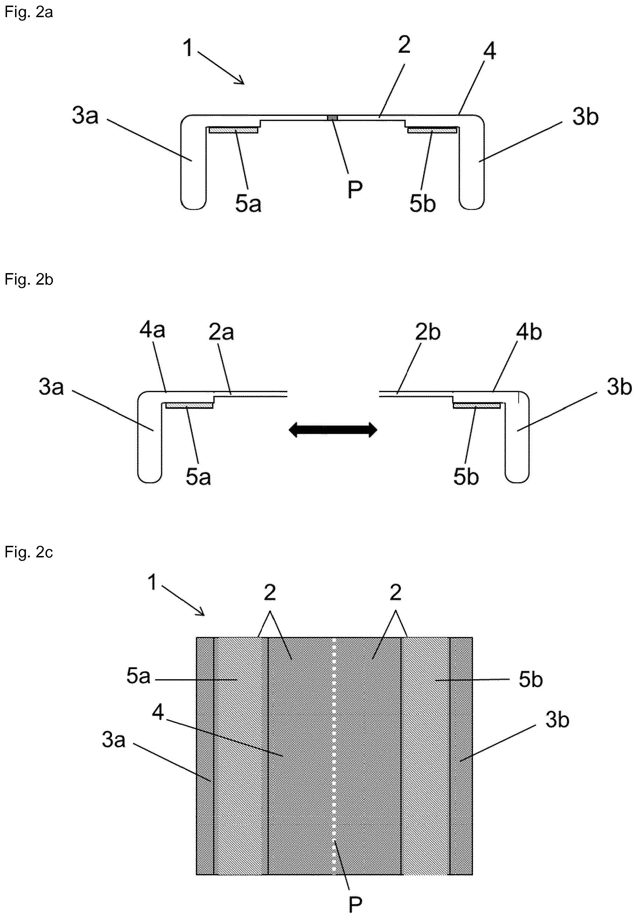

In Figuren **2a** bis **2c** ist eine nicht erfindungsgemäße Ausführungsform eines Fugendichtbandes 1 gezeigt. Das Fugendichtband 1 in Figur 2a weist zwei Dichtelemente 3a und 3b auf, die an den äußeren Rändern des Verbindungselements 2 positioniert sind. Die Dichtelemente 3a und 3b weisen ein Rechteckprofil mit abgerundeten Ecken und ein Vollprofil auf, wobei das Verbindungselement 2 seitlich an den Dichtungselementen 3a und 3b positioniert ist. Weiter sind die Dichtelemente 3a und 3b und Verbindungselement 2 einstückig hergestellt und bestehen aus einem komprimierbaren Schaumstoff, der gegebenenfalls Brandschutzadditive enthält. Das Fugendichtband 1 ist vollständig von einer Kunststofffolie 4 umhüllt und weist eine Perforierung (P) in Längsrichtung des Fugendichtbandes 1 auf. Das Verbindungselement 2 weist zwei selbstklebende Vorrichtungen in Form von Klebestreifen 5a, 5b auf. Figur 2b zeigt das an der Perforierung getrennte Fugendichtband 1 aus Figur 2a (zwei Fugendichtbandhälften), wobei die zwei Fugendichtbandhälften jeweils ein Dichtelement 3a, 3b aufweisen, jeweils einen Teil 2a, 2b des Verbindungselements 2 aufweisen und jeweils teilweise mit Kunststofffolie 4a, 4b umhüllt sind und jeweils eine selbstklebende Vorrichtung 5a, 5b aufweisen. Figur 2c zeigt eine skizzierte Unteransicht des Fugendichtbands 1 gemäß der Ausführungsform von Figur 2a.

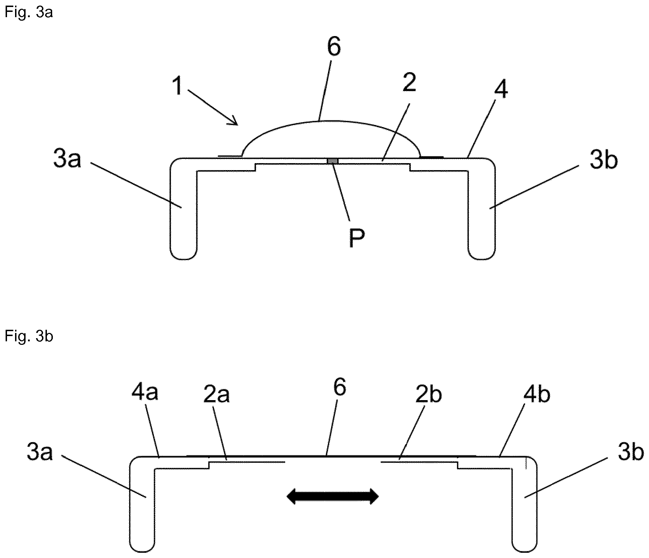

In Figuren **3a** und **3b** ist eine bevorzugte Ausführungsform eines erfindungsgemäßen Fugendichtbandes 1 gezeigt. Figur 3a zeigt eine skizzierte Vorderansicht eines Fugendichtbandes 1, wobei die Dichtelemente 3a und 3b auf, die an den äußeren Rändern des Verbindungselements 2 positioniert sind. Die Dichtelemente 3a und 3b weisen ein Rechteckprofil mit abgerundeten Ecken und ein Vollprofil auf, wobei das Verbindungselement 2 seitlich an den Dichtungselementen 3a und 3b positioniert ist. Weiter sind die Dichtelemente 3a und 3b und Verbindungselement 2 einstückig hergestellt und bestehen aus einem komprimierbaren Schaumstoff, der gegebenenfalls Brandschutzadditive enthält. Das Fugendichtband 1 ist vollständig von einer Kunststofffolie 4 umhüllt und weist eine Perforierung (P) in Längsrichtung des Fugendichtbandes 1 auf und ein Verbreiterungselement 6 aus einer Kunststofffolie, das an der Oberseite des Verbindungselements 2 befestigt ist. Figur 3b zeigt das an der Perforierung getrennte Fugendichtband 1 aus Figur 3a, wobei die zwei Fugendichtbandhälften jeweils ein Dichtelement 3a, 3b aufweisen, jeweils einen Teil 2a, 2b des Verbindungselements 2 aufweisen und jeweils teilweise mit Kunststofffolie 4a, 4b umhüllt sind und wobei das Verbreiterungselement 6 die beiden auseinandergetrennten Fugendichtbandhälften verbindet.

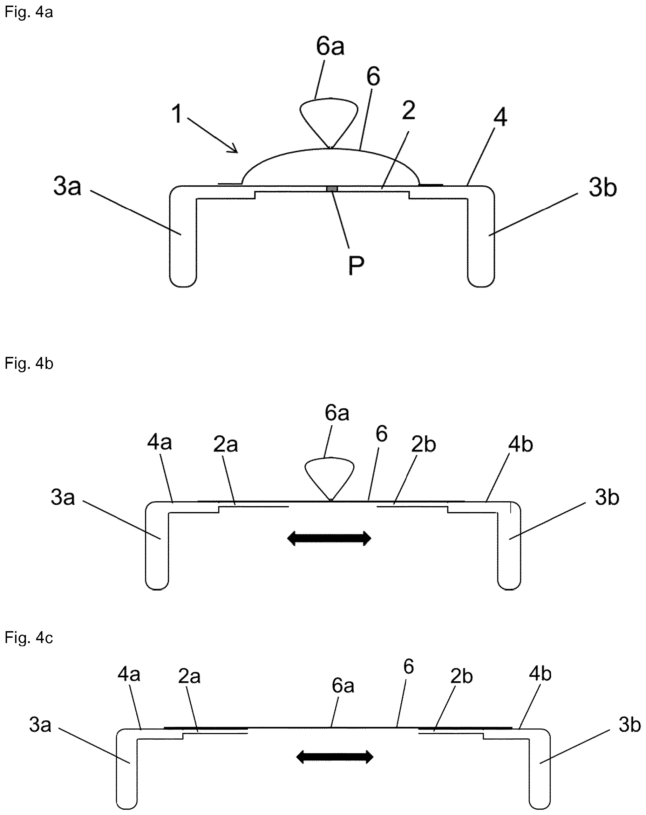

In Figuren **4a** bis **4c** ist eine bevorzugte Ausführungsform eines erfindungsgemäßen Fugendichtbandes 1 gezeigt. Figur 4a zeigt eine skizzierte Vorderansicht eines Fugendichtbandes 1, wobei die Dichtelemente 3a und 3b auf, die an den äußeren Rändern des Verbindungselements 2 positioniert sind. Die Dichtelemente 3a und 3b weisen ein Rechteckprofil mit abgerundeten Ecken und ein Vollprofil auf, wobei das Verbindungselement 2 seitlich an den Dichtungselementen 3a und 3b positioniert ist. Weiter sind die Dichtelemente 3a und 3b und Verbindungselement 2 einstückig hergestellt und bestehen aus einem komprimierbaren Schaumstoff, der gegebenenfalls Brandschutzadditive enthält. Das Fugendichtband 1 ist vollständig von einer Kunststofffolie 4 umhüllt und weist eine Perforierung (P) in Längsrichtung des Fugendichtbandes 1 auf und ein Verbreiterungselement 6 aus einer Kunststofffolie, das an der Oberseite des Verbindungselements 2 befestigt ist. Weiter weist das Fugendichtband 1 ein weiteres Verbreiterungselement 6a in Form einer Schlaufe auf, das aus Kunststofffolie besteht. Figur 4b zeigt das an der Perforierung getrennte Fugendichtband 1 aus Figur 4a, wobei die zwei Fugendichtbandhälften jeweils ein Dichtelement 3a, 3b aufweisen und jeweils teilweise mit Kunststofffolie 4a, 4b umhüllt sind, und wobei das Verbreiterungselement 6 jeweils einen Teil 2a, 2b des Verbindungselements 2 verlängert und die beiden auseinandergetrennten Fugendichtbandhälften zusammenhält. Das weitere Verbreiterungselement 6a in Form einer Schlaufe steht zur weiteren Verbreiterung des Verbindungselements 2 bereit. Diese weitere Verbreiterung ist in Figur 4c gezeigt. Das weitere Verbreiterungselement 6a verlängert nun das Verbreiterungselement 6 und jeweils einen Teil 2a, 2b des Verbindungselements 2 und verbindet so die beiden auseinandergetrennten Fugendichtbandhälften. Die Dimension der Schlaufen 6 bzw. 6a sind so bemessen, dass nach dem Auseinanderziehen der beiden Fugendichtbandhälften mittels Durchtrennen der Perforierung des Verbindungselements die gewünschte Breite für verschiedene alternative Profile entsteht.

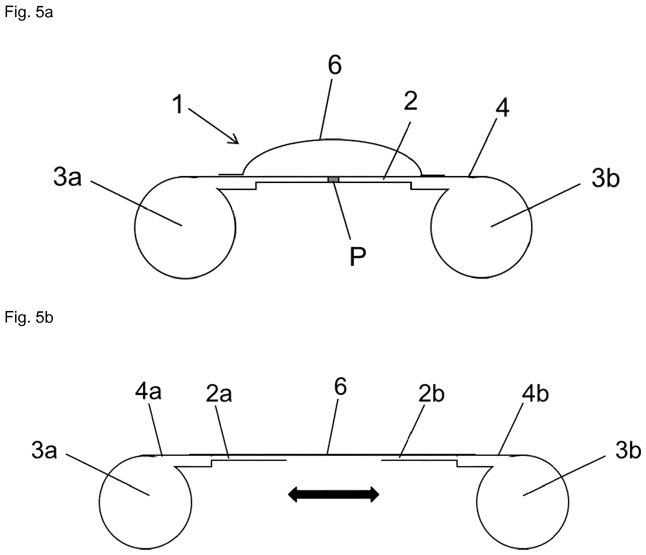

In Figuren **5a** und **5b** ist eine bevorzugte Ausführungsform eines erfindungsgemäßen Fugendichtbandes 1 gezeigt. Figur 5a zeigt eine skizzierte Vorderansicht eines Fugendichtbandes 1, wobei die Dichtelemente 3a und 3b auf, die an den äußeren Rändern des Verbindungselements 2 positioniert sind. Die Dichtelemente 3a und 3b weisen ein Rundprofil und ein Vollprofil auf, wobei das Verbindungselement 2 seitlich an den Dichtungselementen 3a und 3b positioniert ist. Weiter sind die Dichtelemente 3a und 3b und Verbindungselement 2 einstückig hergestellt und bestehen aus einem komprimierbaren Schaumstoff, der gegebenenfalls Brandschutzadditive enthält. Das Fugendichtband 1 ist vollständig von einer Kunststofffolie 4 umhüllt und weist eine Perforierung (P) in Längsrichtung des Fugendichtbandes 1 auf und ein Verbreiterungselement 6 aus einer Kunststofffolie, das an der Oberseite des Verbindungselements 2 befestigt ist. Figur 5b zeigt das an der Perforierung getrennte Fugendichtband 1 aus Figur 5a, wobei die zwei Fugendichtbandhälften jeweils ein Dichtelement 3a, 3b aufweisen, jeweils einen Teil 2a, 2b des Verbindungselements 2 aufweisen und jeweils teilweise mit Kunststofffolie 4a, 4b umhüllt sind und wobei das Verbreiterungselement 6 die beiden auseinandergetrennten Fugendichtbandhälften verbindet.

Jegliche oben erwähnte geometrische sowie materielle Ausgestaltung der Dichtelemente und des Verbindungselements sind beliebig kombinierbar und einsetzbar, um ein Fugendichtband gemäß der vorliegenden Erfindung bereitzustellen.

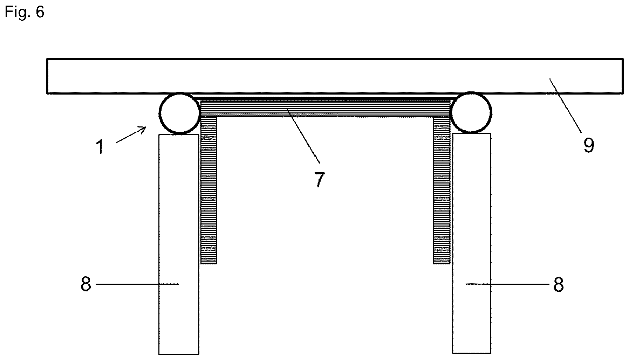

Figur **6** skizziert eine Schnittansicht durch ein fertiges Bauelement mit der in Figuren 5a oder 5b gezeigten Ausführungsform eines erfindungsgemäßen Fugendichtbandes. Insbesondere zeigt Figur 6 die Positionierung einer Ausführungsform des erfindungsgemäßen Fugendichtbandes 1 in einer Anschlussfuge bei Trockenbauwänden. Zur Abdichtung des Spalts zwischen einer Decke 9, dem U-Profil 7 eines Trockenbauständerwerks und den Gipskartonplatten 8 wird in dem ersten Schritt das Fugendichtband 1 auf den Steg des U-Profils 7 gelegt und zusammen mit diesem in dem zweiten Schritt an der Decke 9 in üblicher Weise, z.B. durch Schrauben oder Nageln, befestigt. Dann werden in einem letzten Schritt die Gipskartonplatten 8 an die Flansche des U-Profils 7 angelegt, nach oben Richtung Decke 9 geschoben, wobei ein Spalt zwischen der Oberkante der Gipskartonplatte 8 und der Decke 9 verbleibt, der mit den Dichtelementen 3a und 3b des Fugendichtbandes 1 ausgefüllt ist, um etwa eine vertikale Bewegung der Gipskartonplatte 8 zuzulassen. Dadurch werden die Dichtelemente 3a und 3b zusammengedrückt und dichten so den Spalt zwischen der Decke 9 und dem U-Profil 7 und den Spalt zwischen der Decke 9 und der Gipskartonplatte 8 ab.

Wie aus dem oben Ausgeführten ersichtlich wird, eignet sich das erfindungsgemäße Fugendichtband besonders dazu, in einfacher Weise eine Bauwerksfuge zwischen zwei aneinandergrenzenden Bauteilen sicher abzudichten, insbesondere gegen Schall und/oder Rauch und gegebenenfalls auch gegen Feuer und ist dabei gleichzeitig für unterschiedliche Profilbreiten universell einsetzbar.

Insbesondere ist das erfindungsgemäße Fugendichtband für unterschiedliche Profilbreiten eines U-Profils eines Trockenbauständerwerks universell einsetzbar, insbesondere für die gewöhnlichen Profilbreiten von 2-1/2 Inch (64 mm), 3-5/8 Inch (92 mm), 4 Inch (102 mm), 6 Inch (152 mm), 8 Inch (203 mm) und 10 Inch (254 mm). Durch das erfindungsgemäße Fugendichtband wird ein universelles Produkt für verschiedene Profilgrößen und Anwendungen bereitgestellt, das sich darüber hinaus in einer Fertigungslinie kostengünstig herstellen lässt.

Ferner ist die Anwendung sehr montagefreundlich, da keine zusätzliche Befestigung des Fugendichtbandes etwa an dem Profil oder an der Decke notwendig ist. Ein passgenaues Anlegen des Fugendichtbandes etwa an ein Profil ist aufgrund der Selbstzentrierung des Fugendichtbandes bei der Montage des Profils an einem Bauteil ebenfalls nicht notwendig. Die Montage ist daher denkbar einfach und der Arbeitsaufwand zur Montage des Fugendichtbandes ist deutlich reduziert. Mit der Erfindung wird daher eine sichere und zuverlässige Abdichtung von Fugen zwischen zwei Bauteilen, insbesondere zwischen einem Profil eines Trockenbauständerwerks und einem daran angrenzenden Bauteil, wie etwa eine Decke, Wand oder ein Boden, erreicht. Dabei kann eine beidseitige Abdichtung in nur einem Arbeitsgang erreicht werden, indem ein vorgefertigtes Dichtelement bereitgestellt wird.

Weiterhin hat sich gezeigt, dass mit dem erfindungsgemäßen Fugendichtband hervorragende Dichtigkeiten erzielt werden können, da eine gute Komprimierbarkeit der Dichtelemente durch Auswahl der Dichtmaterialien und/oder Geometriegestaltung ohne zusätzliche Hilfsmittel gewährleistest ist. Die Erfindung ermöglicht es auch, durch entsprechende Auswahl der Dichtmaterialien und/oder Geometriegestaltung, den richtigen Abstand von Gipskartonplatte zu dem Anschlussbauteil ohne zusätzliche Hilfsmittel einzustellen, um besagte Vorkomprimierung zu erreichen.

Mit dem erfindungsgemäßen Fugendichtband kann auch sichergestellt werden, dass bereits durch die Auswahl der Dichtmaterialien und/oder Geometriegestaltung genügend Material installiert wird, um eine hervorragende Dichtigkeit bei maximaler Bewegungsaufnahme zu gewährleisten.

Mit dem erfindungsgemäßen Fugendichtband können ferner Unebenheiten einer Bauteiloberfläche bereits beim Anordnen eines Bauteils an ein anderes Bauteil sicher abgedichtet werden, da die Dichtelemente des Fugendichtbandes ausreichend fest an die Oberfläche des einen Bauteils und gleichzeitig an die Seitenflächen des anderen Bauteils angepresst werden.

In Anbetracht des Vorstehenden ist ersichtlich, dass die Aufgaben der Erfindung gelöst werden. Da verschiedene Änderungen an dem oben beschriebenen Fugendichtband gemacht werden können, ohne vom Umfang der Erfindung, welcher durch die nachfolgenden Ansprüche definiert ist, abzuweichen, ist es beabsichtigt, dass alle in der obigen Beschreibung enthaltenen Gegenstände als illustrativ und nicht in einem einschränkenden Sinne interpretiert werden.

## Patentansprüche

1. Fugendichtband (1) zur Abdichtung einer Fuge zwischen einem ersten Bauteil und einem zweiten Bauteil, mit einem langgestreckten Verbindungselement (2) und mindestens zwei Dichtelementen (3a) und (3b), die beabstandet nebeneinander in Verbindungselementlängsrichtung verlaufend an dem Verbindungselement (2) positioniert sind, wobei das Verbindungselement (2) eine Perforierung (P) aufweist, die ein leichtes Trennen oder Auseinanderziehen ermöglicht, und wobei die Dichtelemente (3a) und (3b) ein Rundprofil, Ovalprofil oder ein Rechteckprofil mit abgerundeten Ecken aufweisen und aus einem verformbaren, langsam abbrennbaren Schaumstoff bestehen, wobei der langsam abbrennbare Schaumstoff keine Möglichkeit der Brandausbreitung durch den Schaumstoff bietet, nicht eigenentflammbar ist und auch nicht abtropft, **dadurch gekennzeichnet, dass** das Verbindungselement (2) ferner zumindest ein Verbreiterungselement (6) in Form einer Schlaufe aufweist.

2. Fugendichtband (1) nach Anspruch 1, **dadurch gekennzeichnet, dass** die Dichtelemente (3a) und (3b) am äußeren Rand des Verbindungselements (2) positioniert sind.

3. Fugendichtband (1) nach Anspruch 1 oder 2, **dadurch gekennzeichnet, dass** die Dichtelemente (3a) und (3b) zumindest über einen Teil ihres Umfangs fest mit dem Verbindungselement (2) verbunden sind.

4. Fugendichtband (1) nach einem der vorhergehenden Ansprüche, **dadurch gekennzeichnet, dass** die Dichtelemente (3a) und (3b) ein Vollprofil aufweisen.

5. Fugendichtband (1) nach einem der vorhergehenden Ansprüche, **dadurch gekennzeichnet, dass** die Dichtelemente (3a) und (3b) aus einem intumeszierenden Material bestehen.

6. Fugendichtband (1) nach einem der vorhergehenden Ansprüche, **dadurch gekennzeichnet, dass** das Verbindungselement (2) aus einem verformbaren Material, einer Kunststofffolie, einem Gewebe, einem Vlies oder dergleichen, bevorzugt aus dem gleichen Material wie die Dichtelemente (3a) und (3b), besteht.

7. Fugendichtband (1) nach einem der vorhergehenden Ansprüche, **dadurch gekennzeichnet, dass** die Dichtelemente (3a) und (3b) und das Verbindungselement (2) einstückig aus einem Material bestehen und gegebenenfalls von einer Kunststofffolie (4) umhüllt sind.

8. Fugendichtband (1) nach einem der vorhergehenden Ansprüche, **dadurch gekennzeichnet, dass** das Verbreiterungselement aus einem verformbaren Material, einer Kunststofffolie, einem Gewebe, einem Vlies oder dergleichen, bevorzugt aus einer Kunststofffolie, besteht.

9. Fugendichtband (1) nach einem der vorhergehenden Ansprüche, **dadurch gekennzeichnet, dass** die Dichtelemente (3a) und (3b) ein Rechteckprofil mit abgerundeten Ecken und Vollprofil aufweisen, das Verbindungselement (2) aus einem offenzelligen Polyurethanschaum besteht, die Dichtelemente (3a) und (3b) aus einem offenzelligen Polyurethanschaum bestehen und das Fugendichtband (1) mit einer Kunststofffolie umhüllt ist.

10. Fugendichtband (1) nach einem der vorhergehenden Ansprüche, **dadurch gekennzeichnet, dass** ein Auflagebereich, der zwischen den beiden Angriffspunkten des Verbindungselements an den Dichtelement liegt, eine Breite im Bereich von etwa 30 mm bis etwa 300 mm hat, vorzugsweise im Bereich von etwa 50 bis 250 mm, bevorzugter im Bereich von etwa 90 bis 155 mm.

11. Dichtanordnung zur Abdichtung einer Fuge zwischen zwei aneinander anliegenden Bauteilen mit wenigstens einem ersten Bauteil (7), einem zweiten Bauteil (9) und einem Fugendichtband (1) nach einem der Ansprüche 1 bis 10,
**dadurch gekennzeichnet, dass** die Dichtelemente (3a) und (3b) im oberen Bereich der Fuge, vorzugsweise am ersten Bauteil (7), positioniert und dazu konfiguriert ist, die Fuge von außen abzudichten.

12. Dichtanordnung nach Anspruch 11, **dadurch gekennzeichnet, dass** die Dichtelemente (3a) und (3b) seitlich an dem ersten Bauteil (7) angeordnet sind.

13. Dichtanordnung nach Anspruch 11 oder 12, **dadurch gekennzeichnet, dass** das erste Bauteil (7) ein Rahmenprofil einer Trockenbauwand und das zweite Bauteil (9) eine Wand, eine Decke oder ein Boden, vorzugsweise eine Decke, eines Bauwerks ist.

## Claims

1. Joint sealing tape (1) for sealing a joint between a first component and a second component, the joint sealing tape comprising an elongate connecting element (2) and at least two sealing elements (3a) and (3b) which are positioned on the connecting element (2) so as to be spaced apart next to one another and so as to extend in the longitudinal direction of the connecting element, wherein the connecting element (2) has a perforation (P) which allows it to be easily separated or pulled apart, and wherein the sealing elements (3a) and (3b) have a round profile, oval profile or a rectangular profile having rounded corners and consist of a deformable, slow-burning foam material, wherein the slow-burning foam material offers no possibility of fire spreading through the foam material, is not inherently flammable and also does not drip, **characterized in that** the connecting element (2) also has at least one widening element (6) in the form of a loop.

2. Joint sealing tape (1) according to claim 1, **characterized in that** the sealing elements (3a) and (3b) are positioned on the outer edge of the connecting element (2).

3. Joint sealing tape (1) according to either claim 1 or 2, **characterized in that** the sealing elements (3a) and (3b) are rigidly connected to the connecting element (2) at least over part of their circumference.

4. Joint sealing tape (1) according to any of the preceding claims, **characterized in that** the sealing elements (3a) and (3b) have a solid profile.

5. Joint-sealing element (1) according to any of the preceding claims, **characterized in that** the sealing elements (3a) and (3b) consist of an intumescent material.

6. Joint sealing tape (1) according to any of the preceding claims, **characterized in that** the connecting element (2) consists of a deformable material, a plastics film, a woven fabric, a non-woven fabric or the like, preferably of the same material as the sealing elements (3a) and (3b).

7. Joint sealing tape (1) according to any of the preceding claims, **characterized in that** the sealing elements (3a) and (3b) and the connecting element (2) are formed in one piece from one material and are optionally encased by a plastics film (4).

8. Joint sealing tape (1) according to any of the preceding claims, **characterized in that** the widening element consists of a deformable material, a plastics film, a woven fabric, a non-woven fabric or the like, preferably of a plastics film.

9. Joint sealing tape (1) according to any of the preceding claims, **characterized in that** the sealing elements (3a) and (3b) have a rectangular profile having rounded corners and a solid profile, the connecting element (2) consists of an open-cell polyurethane foam, the sealing elements (3a) and (3b) consist of an open-cell polyurethane foam and the joint sealing tape (1) is encased by a plastic film.

10. Joint sealing tape (1) according to any of the preceding claims, **characterized in that** a support region, which is located between the two points of contact of the connecting element on the sealing element, has a width in the range of approximately 30 mm to approximately 300 mm, preferably in the range of approximately 50 to 250 mm, more preferably in the range of approximately 90 to 155 mm.

11. Sealing assembly for sealing a joint between two adjacent components, the sealing assembly having at least a first component (7), a second component (9) and a joint sealing tape (1) according to any of claims 1 to 10,
**characterized in that** the sealing elements (3a) and (3b) are positioned in the upper region of the joint, preferably on the first component (7), and are designed to seal the joint from the outside.

12. Sealing assembly according to claim 11, **characterized in that** the sealing elements (3a) and (3b) are arranged laterally on the first component (7).

13. Sealing assembly according to either claim 11 or 12, **characterized in that** the first component (7) is a frame profile of a drywall and the second component (9) is a wall, a ceiling or a floor, preferably a ceiling, of a building.

## Revendications

1. Bande d'étanchéité pour joint (1) permettant de rendre étanche un joint entre un premier composant et un second composant, comportant un élément de liaison (2) allongé et au moins deux éléments d'étanchéité (3a) et (3b), lesquels sont positionnés de manière espacée l'un à côté de l'autre sur l'élément de liaison (2) de manière à s'étendre dans une direction longitudinale de l'élément de liaison, dans laquelle l'élément de liaison (2) présente une perforation (P), laquelle permet une séparation ou un écartement léger, et dans laquelle les éléments d'étanchéité (3a) et (3b) présentent un profil rond, un profil ovale ou un profil rectangulaire comportant des coins arrondis et sont constitués d'une mousse déformable à combustion lente, dans laquelle la mousse à combustion lente n'offre aucune possibilité de propagation de feu à travers la mousse, n'est pas auto-inflammable et ne s'égoutte également pas, **caractérisée en ce que** l'élément de liaison (2) présente en outre au moins un élément d'élargissement (6) sous forme de boucle.

2. Bande d'étanchéité pour joint (1) selon la revendication 1, **caractérisée en ce que** les éléments d'étanchéité (3a) et (3b) sont positionnés sur le bord extérieur de l'élément de liaison (2).

3. Bande d'étanchéité pour joint (1) selon la revendication 1 ou 2, **caractérisée en ce que** les éléments d'étanchéité (3a) et (3b) sont reliés à l'élément de liaison (2) au moins sur une partie de leur circonférence.

4. Bande d'étanchéité pour joint (1) selon l'une des revendications précédentes, **caractérisée en ce que** les éléments d'étanchéité (3a) et (3b) présentent un profil plein.

5. Bande d'étanchéité pour joint (1) selon l'une des revendications précédentes, **caractérisée en ce que** les éléments d'étanchéité (3a) et (3b) sont constitués d'un matériau intumescent.

6. Bande d'étanchéité pour joint (1) selon l'une des revendications précédentes, **caractérisée en ce que** l'élément de liaison (2) est constitué d'un matériau déformable, d'un film plastique, d'un tissu, d'un non-tissé ou similaire, de préférence du même matériau que les éléments d'étanchéité (3a) et (3b).

7. Bande d'étanchéité pour joint (1) selon l'une des revendications précédentes, **caractérisée en ce que** les éléments d'étanchéité (3a) et (3b) et l'élément de liaison (2) sont constitués d'un seul tenant d'un matériau et sont éventuellement enveloppés d'un film plastique (4).

8. Bande d'étanchéité pour joint (1) selon l'une des revendications précédentes, **caractérisée en ce que** l'élément d'élargissement est constitué d'un matériau déformable, d'un film plastique, d'un tissu, d'un non-tissé ou similaire, de préférence d'un film plastique.

9. Bande d'étanchéité pour joint (1) selon l'une des revendications précédentes, **caractérisée en ce que** les éléments d'étanchéité (3a) et (3b) présentent un profil rectangulaire comportant des coins arrondis et un profil plein, l'élément de liaison (2) est constitué d'une mousse de polyuréthane à cellules ouvertes, les éléments d'étanchéité (3a) et (3b) sont constitués d'une mousse de polyuréthane à cellules ouvertes et la bande d'étanchéité pour joint (1) est enveloppée d'un film plastique.

10. Bande d'étanchéité pour joint (1) selon l'une des revendications précédentes, **caractérisée en ce qu'**une région de support se trouvant entre les deux points d'appui de l'élément de liaison au niveau de l'élément d'étanchéité possède une largeur dans la plage allant d'environ 30 mm à environ 300 mm, de préférence dans la plage allant d'environ 50 à 250 mm, de manière particulièrement préférée dans la plage allant d'environ 90 à 155 mm.

11. Agencement d'étanchéité permettant de rendre étanche un joint entre deux composants se trouvant l'un à côté de l'autre, comportant au moins un premier composant (7), un second composant (9) et une bande d'étanchéité pour joint (1) selon l'une des revendications 1 à 10,
**caractérisé en ce que** les éléments d'étanchéité (3a) et (3b) sont positionnés dans la région supérieure du joint, de préférence au niveau du premier composant (7), et sont conçus pour rendre le joint étanche depuis l'extérieur.

12. Agencement d'étanchéité selon la revendication 11, **caractérisé en ce que** les éléments d'étanchéité (3a) et (3b) sont disposés latéralement au niveau du premier composant (7).

13. Agencement d'étanchéité selon la revendication 11 ou 12, **caractérisé en ce que** le premier composant (7) est un profilé de cadre d'une cloison sèche et le second composant (9) est une paroi, un plafond ou un plancher, de préférence un plafond, d'un bâtiment.
